# EUROPEAN PATENT APPLICATION

(11) **EP 4 815 177 A1**
(43) Date of publication of application: **30.09.2026**
(21) Application number: 25758562.0
(22) Date of filing: 13.02.2025
(51) Int. Cl.: H01M 50/548, H01M 50/553, H01M 4/02, H01M 50/533, H01M 50/103, H01M 50/184, H01M 50/204

(54) **BATTERY CELL AND BATTERY MODULE INCLUDING SAME**

(30) Priority: 22.02.2024 KR 20240025652; 10.02.2025 KR 20250016805
(71) Applicant: LG Energy Solution, Ltd., Seoul 07335 (KR)
(72) Inventor: YUN, Hyunwoong, Daejeon 34122 (KR)
(74) Representative: Goddar, Heinz J.
(86) International application number: PCT/KR2025/002111
(87) International publication number: WO 2025/178316

(57) **Abstract**

A battery cell according to certain embodiments of the present disclosure comprises: an electrode assembly in which a first electrode, a second electrode, and a separator interposed between the first electrode and the second electrode are sequentially stacked plural number of times; and a prismatic case that incorporates the electrode assembly, and comprises a first electrode terminal electrically connected to the first electrode and a second electrode terminal electrically connected to the second electrode, wherein the first electrode terminal and the second electrode terminal extend along opposite directions from each other based on the longitudinal direction of the electrode assembly, and wherein the first electrode terminal and the second electrode terminal protrude in an outward direction of the prismatic case at both ends of the prismatic case.

## Description

### [TECHNICAL FIELD]

### Cross-Reference to Related Application(s)

This application claims priority to and the benefit of Korean Patent Application no. KR10-2024-0025652, filed on February 22, 2024, and Korean Patent Application no. KR10-2025-0016805, filed on February 10, 2025, the entire contents of which are incorporated herein by reference.

The present disclosure relates to a battery cell and a battery module including the same, and more particularly, to a battery cell that includes a stack-type electrode assembly built into a prismatic case and is configured such that a first electrode terminal and a second electrode terminal protrude in both directions, and a battery module including the same.

### [BACKGROUND ART]

Secondary batteries which are highly applicable to various products and exhibit superior electrical properties such as high energy density are commonly used not only in portable devices but also in electric vehicles or hybrid electric vehicles driven by electrical power sources. Such a secondary battery has the primary advantage of remarkably reducing the use of fossil fuels and does not generate by-products caused by the use of energy, which can enhance environmental friendliness and energy efficiency. For these reasons, the secondary battery is gaining attention as an alternative energy source.

Presently, commercially available batteries include nickel-cadmium batteries, nickel-hydrogen batteries, nickel-zinc batteries, and lithium secondary batteries. Of these batteries, lithium secondary batteries are emerging as the most popular, as they do not suffer from the memory effect, and therefore, are freely chargeable/dischargeable, have low self-discharge rates, and have high energy density, as compared to nickel-based batteries.

In general, according to the shapes of exterior cases, lithium secondary batteries may be classified into cylindrical or prismatic secondary batteries fabricated by mounting the electrode assembly in a metal can, and pouch-shaped secondary batteries fabricated by mounting the electrode assembly in a pouch made of an aluminum laminate sheet.

Further, the electrode assembly may be roughly classified into a jellyroll type which is wound with a separator interposed between sheet-type positive electrode and negative electrode coated with an active material, a stack-type in which a plurality of positive electrodes and negative electrodes are sequentially stacked with a separator interposed therebetween, and a stack-folding type in which stack-type unit cells are wound with a long separation film.

In regard to the lithium secondary battery, various combinations have been attempted according to the type of exterior material and the electrode assembly housed therein, and as a result, the demand for realizing high battery capacity and energy density is increasing.

### [DETAILED DESCRIPTION OF THE INVENTION]

### [Technical Problem]

Therefore, it is an object of the present disclosure to provide a battery cell that includes a stack-type electrode assembly built into a prismatic case, and is configured such that a first electrode terminal and a second electrode terminal protrude in both directions, and a battery module including the same.

The technical objects to be solved by the embodiments of the present disclosure are not limited to those disclosed above, and other objects which are not mentioned herein should be clearly understood by those skilled in the art from the following description and the accompanying drawing.

### [Technical Solution]

According to certain aspects of the present disclosure, there is provided a battery cell comprising: an electrode assembly in which a first electrode, a second electrode, and a separator interposed between the first electrode and the second electrode are sequentially stacked plural number of times; and a prismatic case that incorporates the electrode assembly, wherein the battery cell comprises a first electrode terminal electrically connected to the first electrode and a second electrode terminal electrically connected to the second electrode, wherein the first electrode terminal and the second electrode terminal extend along opposite directions from each other based on the longitudinal direction of the electrode assembly, and wherein the first electrode terminal and the second electrode terminal protrude in an outward direction of the prismatic case at both ends of the prismatic case.

The first electrode terminal and the second electrode terminal may be respectively structured to have a planar shape.

One end of the first electrode terminal electrically connected to the first electrode and the other end of the first electrode terminal protruding in an outward direction of the prismatic case may be located on the same plane, and one end of the second electrode terminal electrically connected to the second electrode and the other end of the second electrode terminal protruding in an outward direction of the prismatic case may be located on the same plane.

The first electrode may include a first electrode current collector, and a first electrode active material layer formed on at least one of the upper and lower surfaces of the first electrode current collector, and the second electrode may include a second electrode current collector, and a second electrode active material layer formed on at least one of the upper and lower surfaces of the second electrode current collector.

The first electrode may include a first electrode tab, which is a region where the first electrode active material layer is not formed on at least one of the upper and lower surfaces of one end of the first electrode current collector, and the second electrode may include a second electrode tab, which is a region where the second electrode active material layer is not formed on at least one of the upper and lower surfaces of one end of the second electrode current collector.

The first electrode terminal may be electrically connected to the first electrode tab, and the second electrode terminal may be electrically connected to the second electrode tab.

The width of the first electrode terminal may be equal to or greater than the width of the first electrode tab, and the width of the second electrode terminal may be equal to or greater than the width of the second electrode tab.

The width of the first electrode tab may be 50% or more and 100% or less of the width of the first electrode active material layer, and the width of the second electrode tab may be 50% or more and 100% or less of the width of the second electrode active material layer.

The prismatic case may be formed in a can type.

Both ends of the prismatic case may be formed with a first terminal insertion hole and a second terminal insertion hole, respectively, the first electrode terminal may pass through the first terminal insertion hole and protrude to the outside of the prismatic case, and the second electrode terminal may pass through the second terminal insertion hole and protrude to the outside of the prismatic case.

The battery cell may further comprise a first gasket part that seals between the first terminal insertion hole and the first electrode terminal, and a second gasket part that seals between the second terminal insertion hole and the second electrode terminal.

The first gasket part may extend along a space between the first terminal insertion hole and the first electrode terminal, and the second gasket part may extend along a space between the second terminal insertion hole and the second electrode terminal.

The battery cell may further comprise a first sealing part and a second sealing part, which are film members that respectively seal between the first terminal insertion hole and the first electrode terminal and between the second terminal insertion hole and the second electrode terminal.

According to certain other aspects of the present disclosure, there is provided a battery module comprising the above-mentioned battery cell.

### [Advantageous Effects]

According to certain embodiments, a battery cell of the present disclosure and a battery module including the same include a stack-type electrode assembly built into a prismatic case, and thus can more improve a utilization efficiency of an inner space, thereby realizing high capacity.

In addition, the battery cell of the present disclosure and the battery module including the same are configured such that a first electrode terminal and a second electrode terminal protrude in both directions, thereby capable of simplifying the assembly process and parts between the electrode current collector and the electrode terminal, and minimizing a dead space inside the battery cell.

The effects of the present disclosure are not limited to the effects mentioned above, and additional other effects not mentioned above will be clearly understood from the present specification and the appended claims by those skilled in the art.

### [BRIEF DESCRIPTION OF THE DRAWINGS]

FIG. 1 is a diagram showing a battery cell according to certain embodiments of the present disclosure.
FIG. 2 is an exploded perspective view of a prismatic case, showing a structure in which the electrode assembly included in the battery cell of FIG. 1 is omitted.
FIG. 3 is a top view showing an electrode assembly included in the battery cell of FIG. 1.
FIG. 4 is a diagram showing a first electrode, a second electrode, and a separator included in the electrode assembly of FIG. 3.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Now, a battery cell 100 according to certain embodiments of the present disclosure will be described.

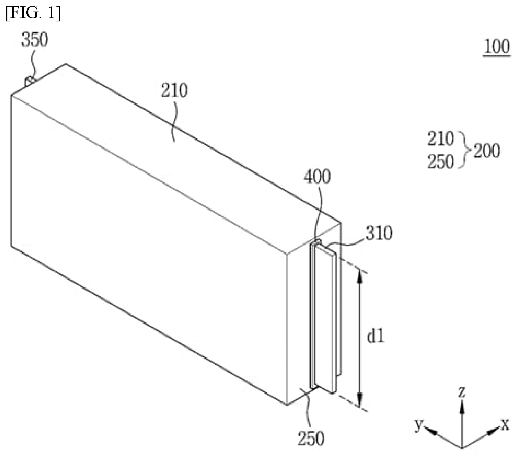

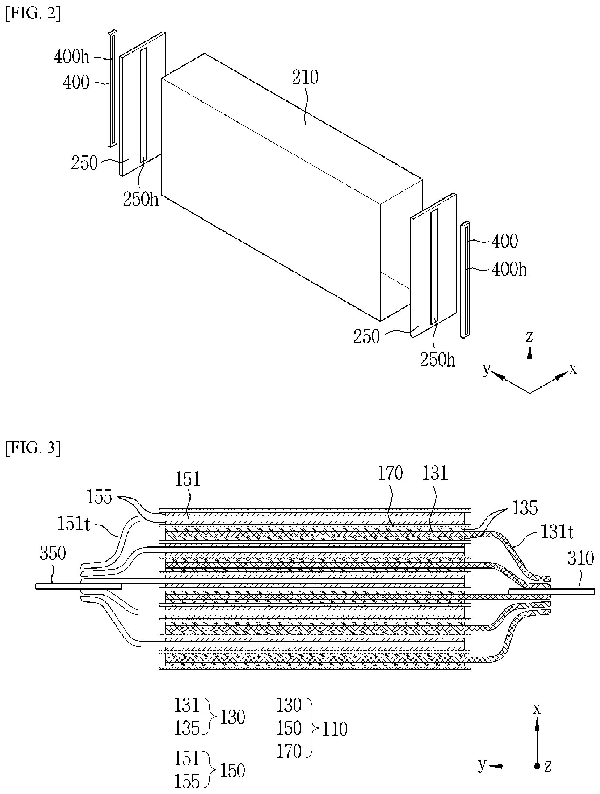

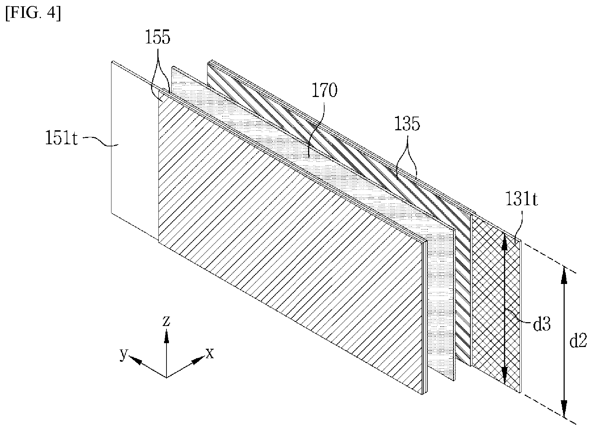

FIG. 1 is a diagram showing a battery cell according to certain embodiments of the present disclosure. FIG. 2 is an exploded perspective view of a prismatic case, showing a structure in which the electrode assembly included in the battery cell of FIG. 1 is omitted. FIG. 3 is a top view showing an electrode assembly included in the battery cell of FIG. 1. FIG. 4 is a diagram showing a first electrode, a second electrode, and a separator included in the electrode assembly of FIG. 3.

Referring to FIGS. 1 and 3, a battery cell 100 according to certain embodiments of the present disclosure comprises an electrode assembly 110 in which a first electrode 130, a second electrode 150, and a separator interposed between the first electrode 130 and the second electrode 150 are sequentially stacked plural number of times; and a prismatic case 200 that houses the electrode assembly 110. Here, the prismatic case 200 can house an electrolyte solution together with the electrode assembly 110 therein.

Referring to FIG. 3, the electrode assembly 110 may be a stack-type electrode assembly in which a first electrode 130, a second electrode 150, and a separator 170 interposed between the first electrode 130 and the second electrode 150 are alternately stacked. Without being limited thereto, however, in a structure in which the first electrode 130 and the second electrode 150 are stacked, it may be a stack-folding type electrode assembly folded in the form of surrounding the first electrode 130 and/or the second electrode 150 while interposing a separator 170 between the first electrode 130 and the second electrode 150.

Thus, unlike a conventional jellyroll type electrode assembly included in a prismatic battery, the battery cell 100 according to the present embodiments includes an electrode assembly 110 in which a first electrode 130, a second electrode 150, and a separator interposed between the first electrode 130 and the second electrode 150 are sequentially stacked plural number of times, and thus has the advantages of performing more parallel connections between electrodes, effectively realizing the reduction of resistance, and more improving the space utilization efficiency and battery capacity inside the prismatic case 200.

Referring to FIGS. 3 and 4, the first electrode 130 includes a first electrode current collector 131, and a first electrode active material layer 135 formed on at least one of the upper and lower surfaces of the first electrode current collector 131, and the second electrode 150 may include a second electrode current collector 151, and a second electrode active material layer 155 formed on at least one of the upper and lower surfaces of the second electrode current collector 151. As an example, as shown in FIGS. 3 and 4, the first electrode 130 may include a first electrode current collector 131, and a first electrode active material layer 135 formed on the upper and lower surfaces of the first electrode current collector 131, respectively, and the second electrode 150 may include a second electrode current collector 151, and a second electrode active material layer 155 formed on the upper and lower surfaces of the second electrode current collector 151, respectively.

Here, the first electrode 130 may be a positive electrode and the second electrode 150 may be a negative electrode. If the first electrode 130 is a positive electrode, the first electrode current collector 131 may correspond to a positive current collector, and the first electrode active material layer 135 may correspond to a positive active material layer. In addition, if the second electrode 150 is a negative electrode, the second electrode current collector 151 may correspond to a negative current collector, and the second electrode active material layer 155 may correspond to a negative active material layer. Without being limited thereto, however, the opposite cases may also be included in the present embodiments.

The first electrode 130 may include a first electrode tab 131t, and the second electrode 150 may include a second electrode tab 151t. More specifically, the first electrode tab 131t is a region where the first electrode active material layer 135 is not formed on at least one of the upper and lower surfaces of the first electrode collector 131, and may be located at one end of the first electrode collector 131. Further, the second electrode tab 151t is a region where the second electrode active material layer 155 is not formed on at least one of the upper and lower surfaces of the second electrode collector 151, and may be located at one end of the second electrode collector 151.

As an example, as shown in FIGS. 3 and 4, the first electrode tab 131t is a region where the first electrode active material layer 135 is not formed on both the upper and lower surfaces of the first electrode current collector 131, and may be located at one end of the first electrode current collector 131. Further, the second electrode tab 151t is a region where the second electrode active material layer 155 is not formed on both the upper and lower surfaces of the second electrode current collector 151, and may be located at one end of the second electrode current collector 151.

As an example, the width d2 of the first electrode tab 131t may be 50% or more and 100% or less of the width d3 of the first electrode active material layer 135. More preferably, the width d2 of the first electrode tab 131t may be the same as the width d3 of the first electrode active material layer 135. More specifically, the width d3 of the first electrode active material layer 135 may mean the width of the portion of the first electrode current collector 131 where the first electrode active material layer 135 is formed. The second electrode tab 151t can also be explained similarly.

Thus, the battery cell 100 according to the present embodiments is configured such that the first electrode tab 131t and the second electrode tab 151t respectively have a relatively wide width, thereby preventing the components of the battery cell from deteriorating while accumulating heat according to resistance increase factors such as quick charge with high current.

Referring to FIGS. 1 and 3, the battery cell 100 according to the present embodiments may include a first electrode terminal 310 electrically connected to the first electrode 130 and a second electrode terminal 350 electrically connected to the second electrode 150. As an example, when the first electrode 130 is a positive electrode, the first electrode terminal 310 may be a positive electrode terminal, and when the second electrode 150 is a negative electrode, the second electrode terminal 350 may be a negative electrode terminal. Without being limited thereto, however, the opposite cases may also be included in the present embodiments.

As an example, as shown in FIGS. 1 and 3, in the battery cell 100 according to the present embodiments, the first electrode terminal 310 and the second electrode terminal 350 may be respectively structured to have a planar shape. In other words, the first electrode terminal 310 and the second electrode terminal 350 may be terminals having a flat shape.

That is, one end of the first electrode terminal 310 electrically connected to the first electrode 130 and the other end of the first electrode terminal 310 protruding in an outward direction of the prismatic case 200 may be located on the same plane, and one end of the second electrode terminal 350 electrically connected to the second electrode 150 and the other end of the second electrode terminal 350 protruding in an outward direction of the prismatic case 200 may be located on the same plane.

More specifically, the first electrode terminal 310 may be electrically connected to the first electrode tab 131t of the first electrode 130, and the second electrode terminal 350 may be electrically connected to the second electrode tab 151t of the second electrode 150. As an example, the first electrode terminal 310 and the first electrode tab 131t may be welded to each other, and the second electrode terminal 350 and the second electrode tab 151t may be welded to each other.

Referring to FIG. 3, in the battery cell 100 according to the present embodiments, a plurality of the first electrode tabs 131t may be stacked on the upper and lower surfaces of the first electrode terminal 310, and the surfaces where the first electrode tabs 131t are in contact each other may also be electrically connected to each other. Further, a plurality of the second electrode tabs 151t may be stacked on the upper and lower surfaces of the second electrode terminal 350, and the surfaces where the second electrode tabs 151t are in contact with each other may also be electrically connected to each other. As an example, the surfaces where the first electrode tabs 131t are in contact with each other may be welded to each other, and the surfaces where the second electrode tabs 151t are in contact with each other may be welded to each other.

As a result, in the battery cell 100 according to the present embodiments, since one end of the first electrode terminal 310 electrically connected to the first electrode tab 131t included in the first electrode 130 is structured to have a planar shape, the surface where the first electrode tab 131t and the first electrode terminal 310 are in contact with each other can be secured to be relatively wide, which provides the advantages of minimizing the generation of heat during quick charge, delaying cell degeneration and improving durability. The second electrode 150 and the second electrode terminal 350 can also be explained similarly.

In addition, in the battery cell 100 according to the present embodiments, the first electrode tab 131t included in the first electrode 130 and one end of the first electrode terminal 310 are directly electrically connected to each other, which provides the advantages that no additional components are required between the first electrode tab 131t and the first electrode terminal 310, and the occurrence of interface resistance caused by the additional components can be minimized through a simplified electrical connection structure. The second electrode 150 and the second electrode terminal 350 can also be explained similarly.

Referring to FIGS. 1 and 3, in the battery cell 100 according to the present embodiments, the first electrode terminal 310 and the second electrode terminal 350 may be extended along opposite directions based on the longitudinal direction of the electrode assembly 110. That is, the battery cell 100 according to the present embodiments may correspond to a bidirectional battery cell in which the positive electrode terminal and the negative electrode terminal protrude in opposite directions from each other.

Thus, in the battery cell 100 according to the present embodiments, the first electrode terminal 310 and the second electrode terminal 350 protrude in both directions, so that the assembly process and parts for forming an electrical connection structure between the first electrode tab 131t and the first electrode terminal 310 and between the second electrode tab 151t and the second electrode terminal 350 can be simplified, and the dead space inside the battery cell 100 can also be minimized.

Furthermore, the first electrode terminal 310 and the second electrode terminal 350 protrude in an outward direction of the prismatic case 200 at both ends of the prismatic case 200, respectively. Here, the both ends of the prismatic case 200 may refer to both side surfaces of the prismatic case 200 located based on the longitudinal direction of the electrode assembly 110. Additionally, the first electrode terminal 310 and the second electrode terminal 350 protruding in an outward direction of the prismatic case 200 may be electrically connected to electrical elements outside the battery cell 100, respectively.

Referring to FIGS. 1 and 4, in the battery cell 100 according to the present embodiments, the width d1 of the first electrode terminal 310 may be equal to or greater than the width d2 of the first electrode tab 131t. The second electrode terminal 350 and the second electrode tab 151t can be explained similarly.

Thus, the battery cell 100 according to the present embodiments is configured such that the width d1 of the first electrode terminal 310 and the second electrode terminal 350 is relatively wider than the width d2 of the first electrode tab 131t and the second electrode tab 151t, respectively, and thus can prevent the components of the battery cell from deteriorating while accumulating heat cause by resistance increase factors such as quick charge with high current.

Referring to FIGS. 1 and 2, the prismatic case 200 may mean a hexahedral case having a space that can house the electrode assembly 110. In other words, the prismatic case 200 may be formed in a can type. As an example, the prismatic case 200 may be made of a heat resistant metal such as aluminum (Al), nickel (Ni), iron (Fe), titanium (Ti), chromium (Cr), tungsten, etc. As another example, the prismatic case 200 may be made of a heat resistant metal such as aluminum (Al), nickel (Ni), iron (Fe), titanium (Ti), chromium (Cr), tungsten, etc., and the inner and/or outer surfaces of the prismatic case 200 may be subjected to an insulating coating treatment.

More specifically, the prismatic case 200 may include a main body case 210 in which both ends are opened based on the longitudinal direction of the electrode assembly 110, and a side surface case 250 that covers both ends of the prismatic case 200. However, the shape of the prismatic case 200 is not limited thereto, and any structure that can easily house the electrode assembly 110 inside the prismatic case 200 may be included in the present embodiments.

As an example, the portions where the main body case 210 and the side surface case 250 about against each other may be joined by a method such as welding, so that the interior of the prismatic case 200 can be sealed from the external environment. Without being limited thereto, however, any joining method that can seal the interior of the prismatic case 200 may be included in this embodiments.

Thus, in the battery cell 100 according to the present embodiments, since the electrode assembly 110 is housed in the prismatic case 200, there is an advantage in that the safety of the battery cell 100 can be further improved.

Referring to FIGS. 1 and 2, the terminal insertion holes 250h may be formed at both ends of the prismatic case 200, respectively. Here, both ends of the prismatic case 200 may refer to a side surface case 250. The terminal insertion hole 250h includes a first terminal insertion hole and a second terminal insertion hole, and the first terminal insertion hole may be formed at one end of the prismatic case 200 where the first electrode terminal 310 is located, and the second terminal insertion hole may be formed at the other end of the prismatic case 200 where the second electrode terminal 350 is located.

The battery cell 100 according to the present embodiments may be configured such that the first electrode terminal 310 passes through the first terminal insertion hole, and protrude to the outside of the side surface case 250, and the second electrode terminal 350 may pass through the second terminal insertion hole and protrude to the outside of the side surface case 250.

Referring to FIGS. 1 and 2, the battery cell 100 according to the present embodiments may include a gasket part 400 that seals between the terminal insertion hole 250h and the first and second electrode terminals 310 and 350. Here, the gasket part 400 may include a first gasket part that seals between the first terminal insertion hole and the first electrode terminal 310, and a second gasket part that seals between the second terminal insertion hole and the second electrode terminal 350. As an example, the gasket part 400 may be made of a material having electrical insulation, impact resistance, elasticity, and durability.

The first gasket part may extend along a space between the first terminal insertion hole and the first electrode terminal 310, and the second gasket part may extend along a space between the second terminal insertion hole and the second electrode terminal 350. In other words, the gasket part 400 includes a gasket hole 400h at a position corresponding to the terminal insertion hole 250h formed in the side surface case 250, and the first and second electrode terminals 310 and 350 may pass through the gasket hole 400h and protrude to the outside of the side surface case 250. That is, the gasket part 400 may be inserted between the terminal insertion hole 250h and the first and second electrode terminals 310 and 350, thereby sealing between the terminal insertion hole 250h and the first and second electrode terminals 310 and 350.

In a battery cell 100 according to certain other embodiments of the present disclosure, the gasket part 400 may be replaced with a first sealing part and a second sealing part, which are film members that seal between the first terminal insertion hole and the first electrode terminal 310 and between the second terminal insertion hole and the second electrode terminal 350, respectively. Here, as heat of a predetermined temperature or higher is applied to the first sealing part and the second sealing part, it is possible to seal between the first terminal insertion hole and the first electrode terminal 310 and between the second terminal insertion hole and the second electrode terminal 350.

Thus, in the battery cell 100 according to the present embodiments, the insulation between the side surface case 250 of the prismatic case 200 and the first and secon d electrode terminals 310 and 350 can be further improved while preventing contact between the side surface case 250 of the prismatic case 200 corresponding to a metal member, and the first and second electrode terminals 310 and 350.

In addition, the battery cell 100 according to the present embodiments may further include a separate cap member that surrounds the other end of the first electrode terminal 310 and the other end of the second electrode terminal 350 protruding in an outward direction of the prismatic case 200. As an example, the cap member may be made of a material having insulating performance. Thereby, in the battery cell 100 according to the present embodiments, the cap member can wrap around the other end of the first electrode terminal 310 and the other end of the second electrode terminal 350 that are exposed to the outside, thereby preventing an external short circuit that may occur at the first electrode terminal 310 and the second electrode terminal 350.

A battery module according to certain other embodiments of the present embodiments may include the above-mentioned battery cell. Meanwhile, the battery module according to the present embodiments may also be packaged in one or more pack cases to form a battery pack. Without being limited thereto, however, as the structure in which the battery module unit is omitted, the above-mentioned battery cell may be directly packaged in the pack case to form a battery pack.

The battery module and/or the battery pack including the same described above can be applied to various devices, which include, for example, transportation vehicles such as electric bicycles, electric vehicles, and hybrids. However, without being limited thereto, the present disclosure can be applied to various devices that can use the battery module and the battery pack including the same may be applied to various devices using secondary batteries, which also falls within the scope of the present disclosure.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

100: battery cell
110: electrode assembly
130: first electrode
131: first electrode current collector
131t: first electrode tab
135: first electrode active material layer
150: second electrode
151: second electrode current collector
151t: second electrode tab
155: second electrode active material layer
170: separator
200: prismatic case
210: main body case
250: side surface case
250h: terminal insertion hole
310: first electrode terminal
350: second electrode terminal
400: gasket part
400h: gasket hole

## Claims

1. A battery cell comprising:
an electrode assembly in which a first electrode, a second electrode, and a separator interposed between the first electrode and the second electrode are sequentially stacked plural number of times; and
a prismatic case that incorporates the electrode assembly,
wherein the battery cell comprises a first electrode terminal electrically connected to the first electrode and a second electrode terminal electrically connected to the second electrode,
wherein the first electrode terminal and the second electrode terminal extend along opposite directions from each other based on the longitudinal direction of the electrode assembly, and
wherein the first electrode terminal and the second electrode terminal protrude in an outward direction of the prismatic case at both ends of the prismatic case.

2. The battery cell of claim 1,
wherein the first electrode terminal and the second electrode terminal are respectively structured to have a planar shape.

3. The battery cell of claim 2,
wherein one end of the first electrode terminal electrically connected to the first electrode and the other end of the first electrode terminal protruding in the outward direction of the prismatic case are located on the same plane, and
one end of the second electrode terminal electrically connected to the second electrode and the other end of the second electrode terminal protruding in the outward direction of the prismatic case are located on the same plane.

4. The battery cell of claim 1,
wherein the first electrode includes a first electrode current collector, and a first electrode active material layer formed on at least one of the upper and lower surfaces of the first electrode current collector, and
the second electrode includes a second electrode current collector, and a second electrode active material layer formed on at least one of the upper and lower surfaces of the second electrode current collector.

5. The battery cell of claim 4,
wherein the first electrode includes a first electrode tab, which is a region where the first electrode active material layer is not formed on at least one of the upper and lower surfaces of one end of the first electrode current collector, and
the second electrode includes a second electrode tab, which is a region where the second electrode active material layer is not formed on at least one of the upper and lower surfaces of one end of the second electrode current collector.

6. The battery cell of claim 5,
wherein the first electrode terminal is electrically connected to the first electrode tab, and
the second electrode terminal is electrically connected to the second electrode tab.

7. The battery cell of claim 6,
wherein the width of the first electrode terminal is equal to or greater than the width of the first electrode tab, and
the width of the second electrode terminal is equal to or greater than the width of the second electrode tab.

8. The battery cell of claim 5,
wherein the width of the first electrode tab is 50% or more and 100% or less of the width of the first electrode active material layer, and
the width of the second electrode tab is 50% or more and 100% or less of the width of the second electrode active material layer.

9. The battery cell of claim 1,
wherein the prismatic case is formed in a can type.

10. The battery cell of claim 1,
wherein both ends of the prismatic case are formed with a first terminal insertion hole and a second terminal insertion hole, respectively,
the first electrode terminal passes through the first terminal insertion hole and protrudes to the outside of the prismatic case, and
the second electrode terminal passes through the second terminal insertion hole and protrudes to the outside of the prismatic case.

11. The battery cell of claim 10,
wherein the battery cell further comprises a first gasket part that seals between the first terminal insertion hole and the first electrode terminal, and a second gasket part that seals between the second terminal insertion hole and the second electrode terminal.

12. The battery cell of claim 11,
wherein the first gasket part extends along a space between the first terminal insertion hole and the first electrode terminal, and
the second gasket part extends along a space between the second terminal insertion hole and the second electrode terminal.

13. The battery cell of claim 10,
further comprising a first sealing part and a second sealing part, which are film members that respectively seal between the first terminal insertion hole and the first electrode terminal and between the second terminal insertion hole and the second electrode terminal.

14. A battery module comprising the battery cell of claim 1.
